# EUROPÄISCHE PATENTSCHRIFT

(11) **EP 0 863 639 B1**
(45) Veröffentlichungstag und Bekanntmachung des Hinweises auf die Patenterteilung: **06.07.2005**
(21) Anmeldenummer: 98200340.2
(22) Anmeldetag: 05.02.1998
(51) Int. Cl.: H04L 12/40, H04L 12/12, H04L 25/02, B60R 16/02

(54) **System zum Übertragen von Daten**
Data transmission system
Système pour la transmission de données

(30) Priorität: 10.02.1997 DE 19704862
(43) Veröffentlichungstag der Anmeldung: 09.09.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Mores, Robert, Röntgenstrasse 24, 22335 Hamburg (DE); Eisele, Harald, c/o Philips Patentverwaltung GmbH, 22335 Hamburg (DE)
(74) Vertreter: von Laue, Hanns-Ulrich

(56) Entgegenhaltungen:
- DE-A- 19 523 031
- JP-A- 7 074 763
- US-A- 4 965 550

## Beschreibung

Die Erfindung betrifft ein System zum Übertragung von Informationen zwischen mehreren Stationen, die über einen Bus, bestehend aus wenigstens einem Leiter miteinander verbunden sind und die Information mittels unterschiedlicher Signalpegel kodiert über den Bus übertragen werden.

Ein derartiges System ist bereits bekannt, beispielsweise aus DE 195 23 031 A1.

Die Station befindet sich dabei im wesentlichen in einem von zwei unterschiedlichen Zuständen. Im normalen oder aktiven Zustand ist die Kommunikation zwischen allen Stationen möglich, das heißt, alle Stationen können ein von jeder anderen beliebigen Station gesendetes Telegramm korrekt empfangen, wobei eine sendende Station die entsprechenden Signalpegel mittels eines Bustreibers auf dem Bus erzwingt. Im Ruhebetrieb stellt sich auf dem Bus ein Ruhepegel ein und die Kommunikation ist nicht möglich, jedoch kann ein von einer beliebigen Station gesendetes Telegramm von den anderen Stationen als Aufforderung zum Wechsel des Systemes in den normalen Zustand verstanden werden, wodurch das System über den Bus aus dem Ruhebetrieb weckbar ist und die Kommunikation wieder aufgenommen werden kann.

In den typischen Anwendungen für diese Systeme ist die Anzahl der Stationen hoch, und es besteht ein Zwang zum Sparen der elektrischen Energie, z.B. bei Kraftfahrzeugen im geparkten Zustand, so daß der Ruhebetrieb möglichst oft und lange einzustellen ist. Gleichzeitig besteht aber in der Regel die Anforderung, daß auch wahrend des Ruhebetriebes ein Teil der Stationen gelegentlich miteinander kommunizieren möchten. Der zeitweilige normale Betrieb des gesamten Systemes mit allen Stationen wäre für diesen Zweck hinsichtlich des Energieverbrauches nicht tragbar.

Die Aufgabe der Erfindung ist es, einen Teilsystembetrieb zu ermöglichen, bei dem ein Teil der Stationen miteinander kommuniziert, während der verbleibende Teil der Stationen im Ruhebetrieb bleibt und die fortwährende Kommunikation des einen Teils der Stationen nicht als Aufforderung versteht, geweckt zu werden.

Diese Aufgabe wird erfindungsgemaß dadurch gelost, daß neben den Signalpegeln ein zusätzlicher Weckpegel definiert wird, der außerhalb der Signalpegel liegt und somit von den Signalpegeln für alle Stationen klar unterscheidbar ist. Stellt sich bei einer Kommunikation dieser Weckpegel nicht ein, bleiben die Stationen, die bereits im Ruhebetrieb sind, weiterhin im Ruhebetrieb.

Um einen Teilsystembetrieb aus einem Ruhebetrieb heraus zu realisieren, werden zunächst alle Stationen kurzzeitig durch Übertragen eines Weckegels geweckt. Diesem Weckpegel folgt normalerweise ein Datentelegramm. Das Telegramm kann ggfs. den Teilnehmerkreis für den Teilsystembetrieb festlegen, so daß die nicht angesprochenen Stationen sofort wieder in den Ruhebetrieb wechseln können. Die weitere Kommunikation im Teilsystembetrieb erfolgt nun mit Signalpegeln.

Die Erfindung betrifft ferner eine Station mit wenigstens einem Empfänger zum Empfangen von über einen Bus empfangenen Signalen, wobei die Station durch ein Wecksignal mit einem außerhalb der Signalpegel liegenden Spannungspegel in den normalen oder aktiven Zustand versetzt werden kann.

Um Verwechslungsmöglichkeiten zu verhindern und die Systemkonsistenz zu erhöhen, kann in den Stationen der Weckpegel logisch identisch wie ein Signalpegel interpretiert werden, so daß während des normalen Betriebs ein Telegramm, welches von einer Station mittels eines versehentlich mit Weckpegeln arbeitenden Bustreibers arbeitenden Bustreibers gesendet wurde, von allen Stationen gleichermaßen korrekt empfangen wird, als hätte der Bustreiber die normalen Signalpegel verwendet.

Ausführungsbeispiele der Erfindung werden nachfolgend anhand der Zeichnung naher erläutert. Es zeigen
- Fig. 1: ein System mit mehreren Stationen, die über einen Bus verbunden sind,
- Fig. 2: schematisch den Aufbau einer Station,
- Fig. 3: verschiedene Signalpegel und Schwellenwerte,
- Fig. 4: schematisch den Aufbau eines Bustreibers in einer Station.

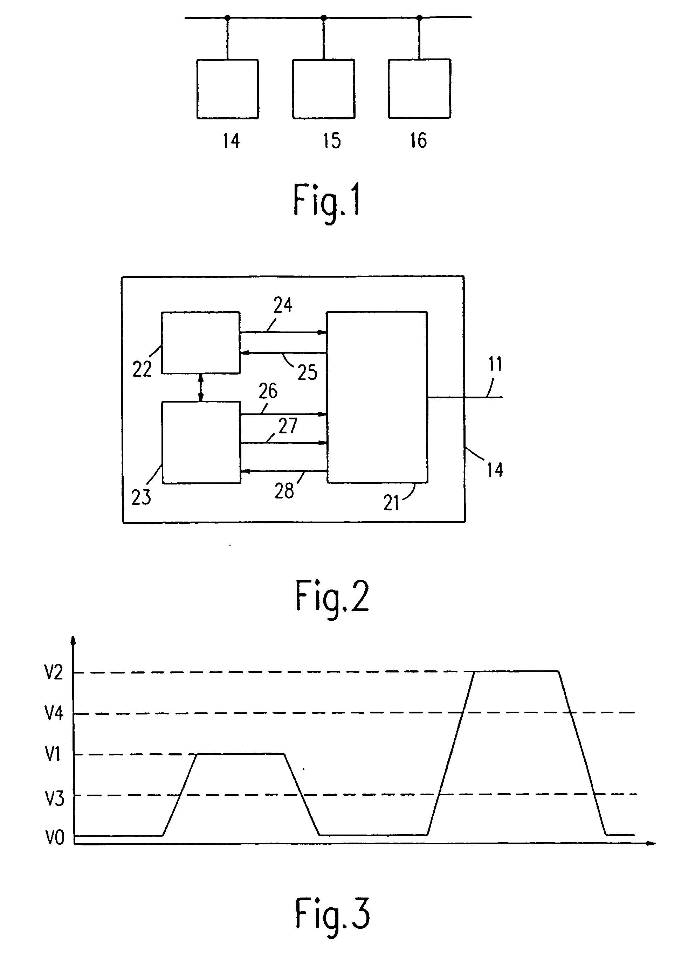

In einem System sind gemäß Fig. 1 eine Anzahl von Stationen 14, 15, 16 mit einem Bus 11 verbunden, über den Informationen darstellende Signale übertragen werden. Dabei handelt es sich um binäre Signale, die seriell über eine einzelne Leitung oder gegenphasig über zwei Leiter übertragen werden. Ferner kann der Bus eine Leitung für die Spannungsversorgung der Stationen enthalten, sofern diese nicht eine eigene Energiequelle enthalten. Jede Station enthält einen Empfänger für die auf dem Bus übertragenen Signale und normalerweise auch einen Bustreiber, durch den Signale von der betreffenden Station über den Bus an alle anderen Stationen ausgesendet werden können.

In jeder Station, beispielsweise in der Station 14, befindet sich gemäß Fig. 2 mindestens ein Bustreiber 21, der mit dem Bus 11 verbunden ist, eine Schaltung 22 zur Abwicklung eines Protokolls zur sicheren Übertragung der einzelnen Telegramme und mindestens eine Steuerschaltung 23 zur Abwicklung anwendungsbezogener Aufgaben Der Bustreiber wandelt die über Leitung 24 von der Protokollschaltung 22 kommenden seriellen Daten in Signalpegel oder Weckpegel auf dem Bus 11 um Der Bustreiber 21 kann über Leitungen 26 und 27 in den Ruhebetrieb mit sehr geringer Leistungsaufnahme, den normalen Betrieb oder den Weckbetrieb versetzt werden. Von dem Bus 11 empfangene Signale werden vom Empfänger im Bustreiber 21 als Daten über Leitung 25 zur weiteren Verarbeitung an die Protokollschaltung 22 übertragen, die die Daten an die Steuerschaltung 23 weiterleitet. Außerdem empfängt die Protokollschaltung 22 Daten von der Steuerschaltung 23 zur Weiterleitung an den Bustreiber 21. Der Bustreiber kann eine erkannte Weckanforderung über Leitung 28 signalisieren. Dadurch wird die Station in einen aktiven Zustand versetzt, beispielsweise Teile der Station wie der Bustreiber oder auch Teile der Steuerschaltung werden mit der Versorgungsspannung verbunden.

Auf dem Bus 11 kann der Bustreiber 21 gemäß Fig. 3 folgende Pegel einstellen:
- einen Ruhepegel V0, der gleichzeitig als logische 0 interpretiert werden kann,
- einen Signalpegel V1, der als logische 1 interpretiert wird,
- einen Weckpegel V2, der gleichermaßen als logische 1 interpretiert wird,
wobei ein Wechsel des Pegels von V0 nach V1 oder umgekehrt nur den Empfangspegel V3 überschreitet und ein Wechsel des Pegels von V0 nach V2 oder umgekehrt beide Empfangspegel V3 und V4 überschreitet, wobei V4 den Weckempfangspegel darstellt.

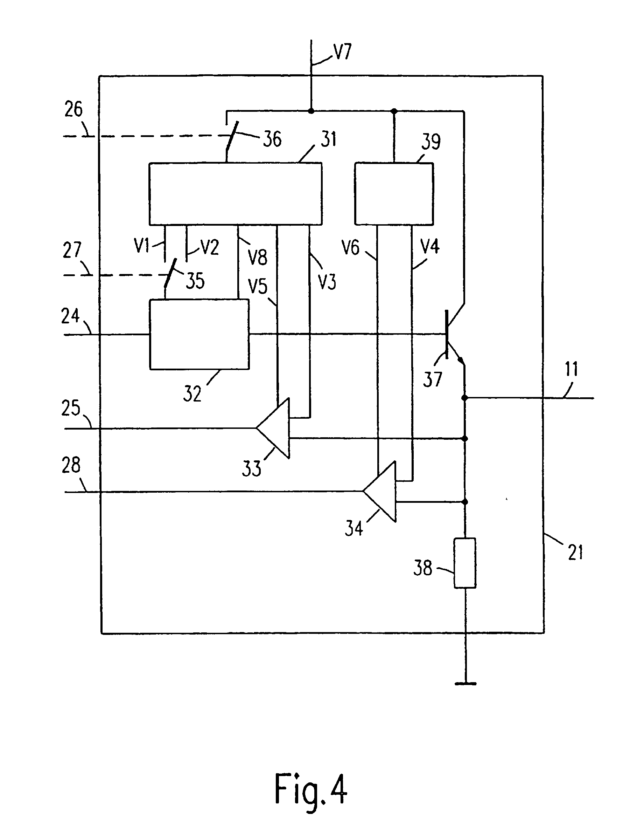

Fig. 4 zeigt den Aufbau des Bustreibers 21 im Prinzip. Ein Spannungswandler 31 stellt aus einer zugeführten Spannung V7 die Spannungen V1 als Signalpegel und V2 als Weckpegel für die Ansteuerschaltung 32 zur Verfügung, die ihrerseits bei einer logischen 1 auf der Leitung 24, die von der Steuerschaltung 23 in Fig. 2 kommt, den Transistor 37 als Spannungsfolger derart schaltet, daß sich auf dem Bus 11 der Pegel V1 bzw. V2 einstellt. Über die ebenfalls von der Steuerschaltung 23 kommende Leitung 27 wird der Schalter 35 von V1 nach V2 und damit von normalem Betrieb auf Aussendung eines Weckpegels umgeschaltet. Bei einer logischen 0 auf der Leitung 24 bleibt der Transistor 37 ausgeschaltet, und es stellt sich auf dem Bus der durch Widerstand 38 vorgegebene Ruhepegel ein.

Der Empfänger im Bustreiber 21 wird im wesentlichen durch die Komparatoren 33 und 34 gebildet. Dafür stellt der Spannungswandler 31 außerdem die Referenzspannung V3 zum Empfang der Daten mittels Komparator 33 und die Versorgungspannung V5 zur Versorgung des Komparators 33 zur Verfügung. Unabhängig davon, ob eine Station mit Signalpegeln oder Weckpegeln sendet, werden die Daten aufgrund der für beide Pegel wirksamen Empfangsschwelle V3 immer korrekt empfangen und über die Leitung 25 der Protokollschaltung 22 in Fig. 2 zugeführt. Die Schaltung 39 stellt Referenzspannung V4 und Versorgungsspannung V6 zum Empfang der Wecksignale mittels Komparator 34 zur Verfügung, die über die Leitung 28 der Steuerschaltung 23 in Fig. 2 zugeführt werden.

Mittels Leitung 26 von der Steuerschaltung kann über den Schalter 36 der Bustreiber in den Ruhebetrieb versetzt werden, indem der Spannungswandler 31 und damit die Spannungen V1, V2, V3, V5 und V8 abgeschaltet werden und nur die Schaltung 39 und damit der Komparator 34 aktiv bleibt, um einen eintreffenden Weckpegel auswerten und ein Signal auf der Leitung 28 abgeben zu können. Über die Leitung 26 können auch noch weitere Schaltungen der Stationen abgeschaltet werden, beispielsweise die Protokollschaltung.

## Patentansprüche

1. System zum Übertragen von Informationen zwischen mehreren Stationen (14, 15, 16) die über einen Bus (11) miteinander verbunden sind und die in einen aktiven Zustand versetzbar sind, in dem Informationen durch wenigstens zwei unterschiedliche Spannungspegel übertragen werden, und die in einen passiven Zustand versetzbar sind, in dem der Stromverbrauch der Stationen (14, 15, 16) wesentlich herabgesetzt ist und aus dem die Stationen durch Empfang eines Wecksignals in den aktiven Zustand versetzbar sind, **dadurch gekennzeichnet, daß** das System Miltel (21) zur Übertragung enthält, die das Wecksignal mit einem Spannungspegel ubertragen, der außerhalb der Spannungspegel für die Übertragung von Daten liegt.

2. Station mit wenigstens einem Empfänger zum Empfangen von Signalen, die durch wenigstens zwei unterschiedliche Spannungspegel über einen mit dem Empfanger verbundenen Bus übertragen werden, wobei durch den Empfang vorgegebener Steuersignale Teile der Station in einen passiven Zustand mit geringem Energieverbrauch versetzbar sind und der Empfang eines Wecksignals vom Bus alle Teile der Station in einen aktiven Zustand versetzt, **dadurch gekennzeichnet, daß** der Empfänger einen Schaltungsteil mit Mitteln (21) zum Auswerten eines Wecksignals aufweist, dessen Spannungspegel außerhalb der Spannungspegel der übrigen Signale liegt.

3. Station nach Anspruch 2, **dadurch gekennzeichnet,**
**daß** der Empfänger eingerichtet ist, das Wecksignal in gleicher Weise wie das Signal mit dem Spannungspegel, der dem Weckpegel am nächsten liegt, zu verarbeiten.

## Claims

1. A system for the transmission of information between a plurality of stations (14, 15, 16) which are interconnected via a bus (11) and can be switched to an active mode, in which information is transmitted by way of at least two different voltage levels, and to a passive mode in which the power consumption of the stations (14, 15, 16) is significantly reduced and wherefrom the stations can be switched to the active state by reception of a wake-up signal, **characterized in that** the system comprises transmission means (21) which transmit the wake-up signal with a voltage level that lies outside the signal level range for the transmission of data.

2. A station which mcludes at least one receiver for receiving signals which are transmitted by way of at least two different voltage levels via a bus which is connected to the receiver, parts of the station being switchable to a passive mode with a low power consumption by the reception of predetermined control signals, whereas the reception of a wake-up signal from the bus sets all parts of the station to an active mode,
**characterized in that** the receiver includes a circuit component comprising means (21) for evaluating a wake-up signal whose voltage level lies outside the voltage level range of the other signals.

3. A station as claimed in Claim 2, **characterized in that** the receiver is arranged to process the wake-up signal in the same way as the signal having the voltage level nearest to the wake-up level.

## Revendications

1. Système de transmission d'informations entre plusieurs stations (14, 15, 16) qui sont reliées entre elles par l'intermédiaire d'un bus (11) et qui peuvent être amenées à un état actif, dans lequel des informations sont transmises par au moins deux mveaux de tension différents et qui peuvent être amenées dans un état passif dans lequel la consommation électrique des stations (14, 15, 16) est réduite et à partir duquel les stations peuvent être amenées par la réception d'un signal d'excitation à l'état actif, **caractérisé en ce que** le système contient des moyens (21) pour la transmission du signal d'excitation avec un niveau de tension qui se trouve en dehors du niveau de tension pour la transmission de données

2. Station avec au moins un récepteur pour la réception de signaux qui sont transmis par au moins deux niveaux de tension différents par l'intermédiaire d'un bus relié avec le récepteur, dans laquelle des parties de la station peuvent être amenées dans un état passif avec une consommation électrique minime par la réception de signaux de commande préalablement déterminée et la réception d'un signal d'excitation par le bus amène toutes les parties de la station dans un état actif, **caractérisée en ce que** le récepteur présente une partie de circuit avec des moyens (21) pour l'évaluation d'un signal d'excitation dont le niveau de tension se trouve en dehors des niveaux de tension des autres signaux.

3. Station selon la revendication 2, **caractérisée en ce que** le récepteur est agencé pour traiter le signal d'excitation de la même manière que le signal avec le niveau de tension qui est le plus proche du niveau d'excitation.
